# EUROPÄISCHE PATENTSCHRIFT

(11) **EP 3 555 471 B1**
(45) Veröffentlichungstag und Bekanntmachung des Hinweises auf die Patenterteilung: **20.12.2023**
(21) Anmeldenummer: 18716915.6
(22) Anmeldetag: 22.03.2018
(51) Int. Cl.: F03G 7/06, F16G 11/02

(54) **AKTUATOR UND ANSCHLUSSELEMENT**
ACTUATOR AND CONNECTION ELEMENT
ACTIONNEUR ET ÉLÉMENT DE RACCORDEMENT

(30) Priorität: 22.03.2017 DE 102017106220
(43) Veröffentlichungstag der Anmeldung: 23.10.2019
(73) Patentinhaber: Component Engineering Services GmbH, 38518 Gifhorn (DE)
(72) Erfinder: WINKELHAKE, Bernd, 38518 Gifhorn (DE)
(74) Vertreter: Flügel Preissner Schober Seidel
(86) Internationale Anmeldenummer: PCT/EP2018/057354
(87) Internationale Veröffentlichungsnummer: WO 2018/172482

(56) Entgegenhaltungen:
- EP-A1- 2 472 112
- DE-A1- 2 606 841
- DE-U1-202014 000 128
- GB-A- 2 533 159
- US-A1- 2010 092 238

## Beschreibung

Die Erfindung betrifft ein Anschlusselement für einen aus einer Formgedächtnislegierung bestehenden Draht eines Aktuators für ein verstellbares Bauteil, insbesondere eines Kraftfahrzeugs. Weiterhin betrifft die Erfindung ein Verfahren zum Verbinden eines Drahts mit einem solchen Anschlusselement und einen Aktuator für ein verstellbares Bauteil, der ein solches Anschlusselement aufweist.

Verstellbare Bauteile eines Kraftfahrzeugs sind etwa Fahrzeugsitze, Tankdeckel, Spiegel oder Zuziehhilfen für die Heckklappe. Ein verstellbares Bauteil kann mit einem Aktuator versehen werden, um das Bauteil automatisch zu verstellen und den Komfort des Bedieners zu erhöhen. Aktuatoren können beispielsweise ein elektromagnetisches Funktionsprinzip haben. In jüngerer Zeit werden auch zunehmend Formgedächtnisaktuatoren eingesetzt. Formgedächtnisaktuatoren haben unter anderem den Vorteil, dass sie vergleichsweise leicht und leise sind.

Formgedächtnisaktuatoren beruhen auf dem Formgedächtniseffekt von Formgedächtnislegierungen. Der Formgedächtniseffekt basiert auf einer kristallographisch reversiblen Martensit-Austenit-Phasenumwandlung, die thermisch angeregt werden kann. Nach einer Deformation können Elemente aus einer Formgedächtnislegierung durch den Formgedächtniseffekt in eine vorher eingeprägte Form zurückgebildet werden. Darüber hinaus sind magnetische Formgedächtnislegierungen bekannt, die einen zusätzlichen, magnetisch anregbaren Formgedächtniseffekt aufweisen.

Als Formgedächtnislegierungen sind insbesondere Nickel-Titan-Legierungen, aber auch Legierungen auf Kupfer- oder Eisenbasis bekannt. Magnetische Formgedächtnislegierungen sind ferromagnetische Werkstoffe, beispielsweise Nickel-Mangan-Gallium-Legierungen.

Ein Aktuator mit einem Stellglied aus Formgedächtnismaterial ist zum Beispiel in WO 2013/037446 A2 offenbart. Der zylinderförmige Aktuator weist ein Stellglied aus Drähten aus einer Formgedächtnislegierung auf. Die Drähte bilden eine Gitterstruktur aus. Die Drähte können nach einer mechanischen Verformung erwärmt werden, um sich durch den thermisch aktivierten Formgedächtniseffekt in einer Ausgangsstellung zurückzuformen.

Weiterhin offenbart US 6 834 835 B1 ein ausziehbares Flügelsystem, bei dem ein Aktuator mit einem Stellglied aus einem mittels Wärme aktivierbaren Formgedächtnismaterial Anwendung findet.

Eine Vorrichtung zum Befestigen eines Bowdenzuges an einem mit einem Außengewinde und einer konischen Anlagefläche versehenen Kraftübertragungselement, wie etwa einer Schraubenöse, beschreibt DE 20 2014 000 128 U1. Die Vorrichtung weist eine auf das Außengewinde des Kraftübertragungselements schraubbare Überwurfmutter und einen mit einer konischen Ringinnenseite versehenen Schneidring auf. Der den Bowdenzug in einer mittigen Öffnung aufnehmende Schneidring wird beim Anziehen der Überwurfmutter an die Anlagefläche des Kraftübertragungselements derart mit einer Kraft beaufschlagt, dass der Schneidring zusammengedrückt wird und die Ringinnenseite in den Bowdenzug einschneidet, um diesen zu klemmen.

Einen Aktuator, der einen aus einer Formgedächtnislegierung bestehenden Draht aufweist, offenbart EP 2 472 112 A1. Der Draht ist über ein Verbindungselement mit einem Bowdenzug verbunden.

US 2010/092238 A1 offenbart eine Klemmvorrichtung, die bei einem aus einer Formgedächtnislegierung bestehenden Draht Anwendung findet. Die Klemmvorrichtung umfasst einen konusförmigen Klemmkeil, der in einer Klemmbuchse verspannt ist, um den Draht zu fixieren.

GB 2 533 159 A offenbart einen Klemmkeil in Form einer Kappe mit schlitzförmigen Ausnehmungen, die sich in axialer Richtung erstrecken und an einer vorderen Stirnfläche münden.

DE 20 2014 000128 U1 offenbart eine Vorrichtung zum Befestigen eines Kraftübertragungselements an einer Welle, bei der die Welle mithilfe von einem Schneidring und einer Überwurfmutter geklemmt und mit dem Kraftübertragungselement verbunden wird. Bei dem Kraftübertragungselement kann es sich um einen Bowdenzug handeln.

Der Erfindung liegt die Aufgabe zugrunde, ein Anschlusselement für einen aus einer Formgedächtnislegierung bestehenden Draht eines Aktuators für ein verstellbares Bauteil, ein Verfahren zum Verbinden eines Drahts mit einem solchen Anschlusselement und einen Aktuator zu schaffen, die eine verbesserte mechanische Anbindung sicherstellen.

Diese Aufgabe wird durch ein Anschlusselement nach Anspruch 1, ein Verfahren nach Anspruch 9 und einen Aktuator nach Anspruch 10 gelöst. Vorteilhafte Ausgestaltungen des Anschlusselements sind Gegenstand der Ansprüche 2 bis 8. Vorteilhafte Ausgestaltungen des Aktuators sind Gegenstand der Ansprüche 11 bis 16.

Das erfindungsgemäße Anschlusselement für einen aus einer Formgedächtnislegierung bestehenden Draht eines Aktuator für ein verstellbares Bauteil umfasst einen Draht, einen Klemmkeil, der eine sich in der axialen Richtung erstreckende Aufnahmeöffnung für den Draht und eine mit wenigstens einem Klemmabschnitt versehene Mantelfläche aufweist. Das Anschlusselement umfasst ferner eine auf den Klemmkeil aufsteckbare Hülse, die eine sich in der axialen Richtung erstreckende Durchgangsöffnung und eine mit wenigstens einem Klemmabschnitt versehene Innenfläche aufweist. Weiterhin umfasst das Anschlusselement eine mit dem Klemmkeil gekoppelte oder verbundene Pressbuchse, die einen den Draht aufnehmenden Hohlraum und eine in radialer Richtung plastisch verformbare und mit einer Innenfläche versehene Wandung aufweist. Durch eine plastische Verformung der Wandung wird eine erste Klemmkraft auf den Draht an wenigstens einem durch die Innenfläche gebildeten Halteabschnitt erzeugt, die den Draht und die Pressbuchse kraftschlüssig miteinander verbindet. Zudem werden durch eine in dem Draht in der axialen Richtung hervorgerufene Zugkraft der Klemmkeil und die Hülse derart gegeneinander verspannt, dass eine zweite Klemmkraft auf den Draht in der Aufnahmeöffnung des Klemmkeils hervorgerufen wird, die zusätzlich den Draht und den Klemmkeil kraftschlüssig miteinander verbindet.

Das erfindungsgemäße Anschlusselement beruht auf der Erkenntnis, die Klemmkraft, mit welcher der Draht an dem Anschlusselement befestigt wird, aufzuteilen auf eine durch die Pressbuchse hervorgerufene Anfangsklemmkraft und eine durch den Klemmkeil hervorgerufene zusätzliche Klemmkraft. Die Pressbuchse wird mit Hilfe eines Werkzeuges plastisch verformt, so dass die Anfangsklemmkraft auf den Draht wirkt. Die eine Kraftverstärkung bewirkende und damit eine zuverlässige Befestigung sicherstellende zusätzliche Klemmkraft entsteht, indem die Hülse durch die Zugkraft im Draht auf den Klemmkeil gedrückt wird.

In einer bevorzugten Ausgestaltung des Anschlusselements weist der Klemmkeil eine in der axialen Richtung vordere Stirnfläche auf und ist mit wenigstens einer schlitzförmigen Ausnehmung versehen. Die Ausnehmung erstreckt sich vorzugsweise in der axialen Richtung und mündet weiter vorzugsweise an der vorderen Stirnfläche. Die durch die insbesondere schlitzförmige Ausnehmung hervorgerufene Verformungsfähigkeit des Klemmkeils stellt einen Toleranzausgleich sicher und trägt damit den in der Praxis unweigerlich auftretenden Fertigungstoleranzen in den Durchmessern von Draht, Klemmkeil und Hülse Rechnung.

In einer weiteren bevorzugten Ausgestaltung des erfindungsgemäßen Anschlusselements weisen die Mantelfläche des Klemmkeils und/oder die Innenfläche der Hülse jeweils wenigstens einen sich in der axialen Richtung konisch verjüngenden Klemmabschnitt und/oder wenigstens einen geradlinigen Klemmabschnitt auf. Der oder die Klemmabschnitte des Klemmkeils wirken mit den entsprechenden Klemmabschnitten der Hülse zusammen, um den Klemmkeil und die Hülse zuverlässig gegeneinander zu verspannen.

Die Pressbuchse und der Klemmkeil können einteilig ausgestaltet sein. Bevorzugt sind die Pressbuchse und der Klemmkeil jedoch als separate Bauteile ausgestaltet. Vorzugsweise weist die Pressbuchse eine Kontaktfläche und der Klemmkeil eine Gegenfläche, die an der Kontaktfläche anliegt, auf. Die Kontaktfläche der Pressbuchse wird durch die Zugkraft im Draht auf die Gegenfläche des Klemmkeils gedrückt.

Der Klemmkeil weist einen in der axialen Richtung hinteren Absatz auf, durch den zweckmäßigerweise die Gegenfläche gebildet wird. Die Hülse weist eine in der axialen Richtung vordere Stirnfläche und eine in der axialen Richtung hintere Stirnfläche auf. Bevorzugt sind bei auf dem Klemmkeil aufgesteckter Hülse der Absatz des Klemmkeils und die hintere Stirnfläche der Hülse durch einen vorgegebenen Abstand voneinander getrennt, wodurch eine ungehinderte Verspannung von Hülse und Klemmkeil sichergestellt ist. Weiterhin steht bevorzugt bei auf dem Klemmkeil aufgesteckter Hülse die vordere Stirnfläche der Hülse in der axialen Richtung über die vordere Stirnfläche des Klemmkeils über, so dass die Innenfläche der Hülse einen Überstand bildet. Der Überstand ermöglicht eine gezielte Festlegung der Klemmabschnitte an der Innenfläche der Hülse und an der Mantelfläche des Klemmkeils.

Der erfindungsgemäße Aktuator umfasst einen Draht aus einer Formgedächtnislegierung, der einen ersten Endabschnitt und einen zweiten Endabschnitt aufweist und sich über eine veränderbare Länge in einer axialen Richtung erstreckt, ein Stellglied, das in der axialen Richtung zwischen einer ersten Position und einer zweiten Position beweglich ist, ein Loslager, durch das der Draht in der axialen Richtung beweglich gelagert ist, ein Festlager, durch das der Draht in der axialen Richtung fest angeordnet ist, wenigstens ein Widerlager, das mit dem Loslager oder dem Festlager verbunden und mit einer Durchgangsöffnung für den Draht und einer Lagerfläche, die geeignet ist, eine Kraft in radialer Richtung zu übertragen, versehen ist, und wenigstens eines des erfindungsgemäßen elastisch verformbaren Anschlusselements, das eine Aufnahmeöffnung für den Draht, die einen veränderlichen Durchmesser hat und in welcher der Draht im Bereich des ersten Endabschnitts oder des zweiten Endabschnitts eingeklemmt ist, und eine Kontaktfläche, die an der Lagerfläche des Widerlagers anliegt, aufweist, wobei durch eine Verkürzung der Länge des Drahts die Kontaktfläche gegen die Lagerfläche verspannbar und das Stellglied von der ersten Position in die zweite Position bewegbar ist.

Wenn der Formgedächtniseffekt des Werkstoffs des Drahts aktiviert wird, bewirkt die hervorgerufene Phasenumwandlung eine Verformung des Drahts. Die Länge des Drahts verkürzt sich auf eine vorher eingeprägte Länge. Durch die Verkürzung überträgt der Draht eine Zugkraft auf das Anschlusselement. Die Zugkraft wird über die Kontaktfläche des Anschlusselements und die Lagerfläche auf das Widerlager und weiter auf das Loslager und/oder das Festlager übertragen. Das Anschlusselement am ersten Endabschnitt wird aufgrund der Zugkraft mit Widerlager und Loslager zu dem Festlager hin bewegt. Das Stellglied wird dabei durch eine entsprechende Anbindung von der ersten Position in die zweite Position bewegt.

Das Aktivieren des Formgedächtniseffekts kann beispielsweise thermisch erfolgen. Dazu kann der Draht direkt mit Wärme beaufschlagt werden. Der Draht kann ferner mit einem elektrischen Strom beaufschlagt werden, sodass aufgrund des Eigenwiderstands des Drahts eine Erwärmung stattfindet, die den Formgedächtniseffekt aktiviert. Bei Verwenden einer magnetischen Formgedächtnislegierung kann der Formgedächtniseffekt auch durch Anlegen eines Magnetfelds angeregt werden.

Durch die Lagerfläche des Widerlagers, die geeignet ist, eine Kraft in radialer Richtung zu übertragen, und die Kontaktfläche, die an der Lagerfläche anliegt, wird bei einer Verkürzung der Länge des Drahts die Kontaktfläche gegen die Lagerfläche verspannt. Die von dem Draht auf das Anschlusselement übertragene Zugkraft in der axialen Richtung wird durch die Ausgestaltung der Lagerfläche und der Kontaktfläche durch das Widerlager derart aufgenommen, dass dieses auf das Anschlusselement eine Gegenkraft mit einer in der radialen Richtung wirkenden Komponente bewirkt. Das Anschlusselement wird in der radialen Richtung zusammengedrückt. Der veränderliche Durchmesser der Aufnahmeöffnung wird verkleinert. Somit wird bei einer durch eine Verkürzung des Drahts hervorgerufenen Zugkraft die Haltekraft, die das Anschlusselement auf den Draht bewirkt, automatisch erhöht. Dies bewirkt, dass der Draht in dem Anschlusselement im Belastungsfall sicher gehalten wird, ohne dass jedoch eine Beschädigung oder plastische Verformung des Drahts hervorgerufen wird, wie dies beispielsweise beim Crimpen erfolgt. Durch die beschädigungsfreie Verbindung des Drahts mit dem Anschlusselement wird zudem die gleichmäßige Wärmeverteilung in dem Draht verbessert.

Vorteilhaft ist der Draht an dem ersten Endabschnitt und an dem zweiten Endabschnitt jeweils mit dem Anschlusselement verbunden. Anschlusselemente an beiden Endabschnitten ermöglichen beispielsweise, dass der Draht an den Anschlusselementen mit einem elektrischen Strom beaufschlagt werden kann.

Vorteilhaft sind die Lagerfläche und die Kontaktfläche jeweils konusförmig ausgebildet. Eine konusförmige Fläche ermöglicht, dass das Widerlager die Gegenkraft mit der in der radialen Richtung wirkenden Komponente auf das Anschlusselement bewirken kann. Ferner kann das Anschlusselement bei einer durch den Draht auf das Anschlusselement bewirkten Zugkraft entlang der konusförmigen Fläche weiter verspannt werden, sodass die Gegenkraft des Widerlagers erhöht wird.

Vorteilhaft ist der Draht an dem ersten Endabschnitt und an dem zweiten Endabschnitt jeweils mit dem Anschlusselement verbunden. Anschlusselemente an beiden Endabschnitten ermöglichen beispielsweise, dass der Draht an den Anschlusselementen mit einem elektrischen Strom beaufschlagt werden kann.

Vorzugsweise ist die Aufnahmeöffnung im Querschnitt rund, bevorzugt kreisförmig, ausgestaltet, sodass eine über den Umfang gleichmäßig verteilte Krafteinleitung in den Draht erzielt wird. Bei Beaufschlagung des Drahts mit elektrischem Strom erstreckt sich die elektrische Kontaktfläche konzentrisch über den Drahtumfang. Der elektrische Übergangswiderstand wir dadurch gering gehalten.

Bei einer vorteilhaften Ausgestaltung sind das Widerlager und das Loslager und/oder das Widerlager und das Festlager einteilig ausgebildet. Durch eine einteilige Ausbildung ergibt sich ein einfacherer Aufbau des Aktuators.

Vorteilhaft umfasst der Aktuator eine fest angeordnete Axialführung, die mit einer Durchgangsöffnung für den Draht und mit einer Abstützfläche versehen ist. Vorzugsweise weist der Aktuator eine den Draht umgebende Druckhülle auf, die zwischen dem Festlager und der Abstützfläche der Axialführung eingespannt und geeignet ist, in der axialen Richtung eine Druckkraft zu übertragen. Die Zugkraft des Drahts wird dann an dem Festlager durch die Druckhülle aufgenommen.

Bei einer vorteilhaften Ausgestaltung weisen das Loslager und/oder das Festlager eine Aufnahme für die Druckhülle auf. In der Aufnahme kann die Position der Druckhülle relativ zu dem Loslager oder dem Festlager besser definiert werden. Vorzugsweise weist die Aufnahme einen Vorsprung auf, der geeignet ist, die Druckhülle in der axialen Richtung an dem Loslager oder dem Festlager zu halten. Dadurch wird ein Loslösen der Druckhülle von dem Loslager oder dem Festlager verhindert.

Vorteilhaft weist der Aktuator eine Rückstellfeder auf, die derart ausgestaltet ist, dass das Stellglied entgegen der Wirkung der Rückstellfeder von der ersten Position in die zweite Position bewegbar ist. Vorzugsweise ist die Rückstellfeder als Druckfeder ausgestaltet.

Wenn der Formgedächtniseffekt des Werkstoffs des Drahts nicht aktiviert ist, wird die Druckkraft, die die Rückstellfeder auf das Loslager ausübt, über das Widerlager und über das Anschlusselement auf den Draht übertragen. Auf den Draht wirkt dadurch eine Zugkraft, die eine Dehnung und so eine pseudoplastische Verformung des Drahts bewirkt; die Länge des Drahts wird vergrößert. Das Stellglied wird dabei von der zweiten Position zurück in die erste Position bewegt.

Bei einer vorteilhaften Ausgestaltung ist das Stellglied mit einer Durchgangsöffnung für den Draht versehen. Vorzugsweise erstreckt sich der Draht mit einem in radialer Richtung vorhandenen Spiel durch die Durchgangsöffnung. Dadurch ist ein kompakter Aufbau des Aktuators möglich, bei dem zugleich gewährleistet ist, dass die Zugkraft des Drahts und die Druckkraft der Rückstellfeder entgegenwirken.

Vorteilhaft weist das Anschlusselement einen Anschlussabschnitt zur elektrischen Kontaktierung auf. In diesem Fall kann der Formgedächtniseffekt durch Anlegen eines elektrischen Stroms aktiviert werden.

Vorteilhaft umfasst der Aktuator ein wärmeisolierendes Innenrohr, das den Draht wenigstens teilweise umgibt. Durch die bessere Isolierung kann der Draht schneller gleichmäßig erwärmt werden.

Bei einer vorteilhaften Ausgestaltung umfasst der Aktuator ein Gehäuse zur Aufnahme des Stellglieds und/oder des Loslagers und/oder der Axialführung. Vorzugsweise ist das Gehäuse mit wenigstens einem Befestigungsvorsprung versehen.

Vorteilhaft ist die Rückstellfeder im Gehäuse angeordnet und zwischen der Axialführung und dem Stellglied eingespannt.

Bei einer vorteilhaften Ausgestaltung ist das Stellglied mit einer Aufnahme für einen Bowdenzug versehen, der einen Innenzug und eine Bowdenzughülle aufweist. Vorzugsweise ist die Aufnahme ausgestaltet, formschlüssig mit dem Innenzug verbunden zu werden. Durch die Bewegung des Stellglieds von der ersten Position in die zweite Position und zurück kann der Bowdenzug das verstellbare Bauteil verstellen. Die Aufnahme stellt eine einheitliche Schnittstelle für verstellbare Bauteile dar, die mit einem Bowdenzug versehen sein können. So ergibt sich ein äußerst breites Einsatzfeld für den Aktuator.

Vorteilhaft weist der Aktuator ein Führungsteil für den Bowdenzug auf, das am Gehäuse befestigt ist und eine Durchgangsöffnung für den Innenzug und eine Anschlagfläche für die Bowdenzughülle aufweist. Vorzugsweise ist das Führungsteil mit einer Nut versehen, in die formschlüssig wenigstens ein Befestigungsvorsprung eingreift.

Das erfindungsgemäße verstellbare Bauteil umfasst den erfindungsgemäßen Aktuator, mittels dem das verstellbare Bauteil verstellt werden kann.

Zum Verbinden eines Drahts, der einen Durchmesser aufweist und sich in einer axialen Richtung erstreckt, mit einem in der axialen Richtung elastisch verformbaren Anschlusselement des Aktuators, das eine Aufnahmeöffnung für den Draht aufweist, die einen veränderlichen Durchmesser hat und in welcher der Draht einklemmbar ist, kann das Anschlusselement zunächst in der axialen Richtung zusammengedrückt werden, um die Aufnahmeöffnung von einem ersten Durchmesser auf einen zweiten Durchmesser, der größer ist als der Durchmesser des Drahts, zu vergrößern. Anschließend kann der Draht in die Aufnahmeöffnung eingeführt werden, wenn der zweite Durchmesser der Aufnahmeöffnung erreicht ist. Schließlich kann das Anschlusselement in der axialen Richtung entspannt werden, um die Aufnahmeöffnung von dem zweiten Durchmesser auf den ersten Durchmesser zurückzuführen.

Bei einem weiteren Verfahren zum Verbinden eines Drahts, der einen Durchmesser aufweist und sich in einer axialen Richtung erstreckt, mit einem elastisch verformbaren Anschlusselement des Aktuators, das eine Aufnahmeöffnung für den Draht aufweist, die einen veränderlichen Durchmesser hat und in welcher der Draht einklemmbar ist, kann das Anschlusselement zunächst erwärmt werden, um die Aufnahmeöffnung von einem ersten Durchmesser auf einen zweiten Durchmesser, der größer ist als der Durchmesser des Drahts, zu vergrößern. Anschließend kann der Draht in die Aufnahmeöffnung eingeführt werden, wenn der zweite Durchmesser der Aufnahmeöffnung erreicht ist. Schließlich kann das Anschlusselement abgekühlt werden, um die Aufnahmeöffnung von dem zweiten Durchmesser auf den ersten Durchmesser zurückzuführen. Das Anschlusselement wird so auf den Draht aufgeschrumpft, um eine Querpressverbindung herzustellen.

Diese Verfahren verzichten auf eine plastische Verformung des Anschlusselements und des Drahts, wie es beispielsweise beim Crimpen geschieht. Dadurch wird eine Beschädigung des Drahts und des Anschlusselements verhindert. Gleichzeitig wird eine verbesserte Wärmeverteilung in dem Draht erzielt.

Im Folgenden wird die Erfindung schematisch mit Bezug auf Zeichnungen anhand von Ausführungsbeispielen beschrieben. In den Zeichnungen zeigt:
- Fig. 1: eine Schnittansicht eines ersten Ausführungsbeispiels eines Aktuators;
- Fig. 1a: eine vergrößerte Schnittansicht gemäß dem Detail Ia aus Fig. 1;
- Fig. 1b: eine vergrößerte Schnittansicht gemäß dem Detail Ib aus Fig. 1;
- Fig. 1c: eine vergrößerte Schnittansicht eines Anschlusselements;
- Fig. 1d: eine vergrößerte Schnittansicht des Anschlusselements aus Fig. 1c, in welcher der Durchmesser der Aufnahmeöffnung vergrößert ist;
- Fig. 2a: eine Schnittansicht eines zweiten Ausführungsbeispiels des Aktuators, in der das Stellglied in der ersten Position dargestellt ist;
- Fig. 2b: eine Schnittansicht des Aktuators aus Fig. 2a, in der das Stellglied in der zweiten Position dargestellt ist;
- Fig. 2c: eine Draufsicht auf das Ausführungsbeispiel gemäß Fig. 2a, 2b bei abgenommenem Gehäusedeckel;
- Fig. 3a: eine Schnittansicht des erfindungsgemäßen Anschlusselements;
- Fig. 3b: eine weitere Schnittansicht des erfindungsgemäßen Anschlusselements, die eine schlitzförmige Ausnehmung zu erkennen gibt, und
- Fig. 4: eine perspektivische Ansicht des erfindungsgemäßen Anschlusselements.

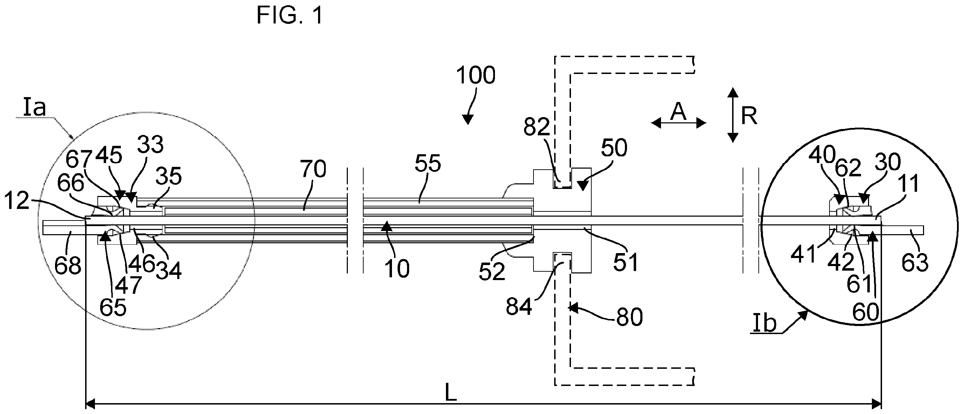

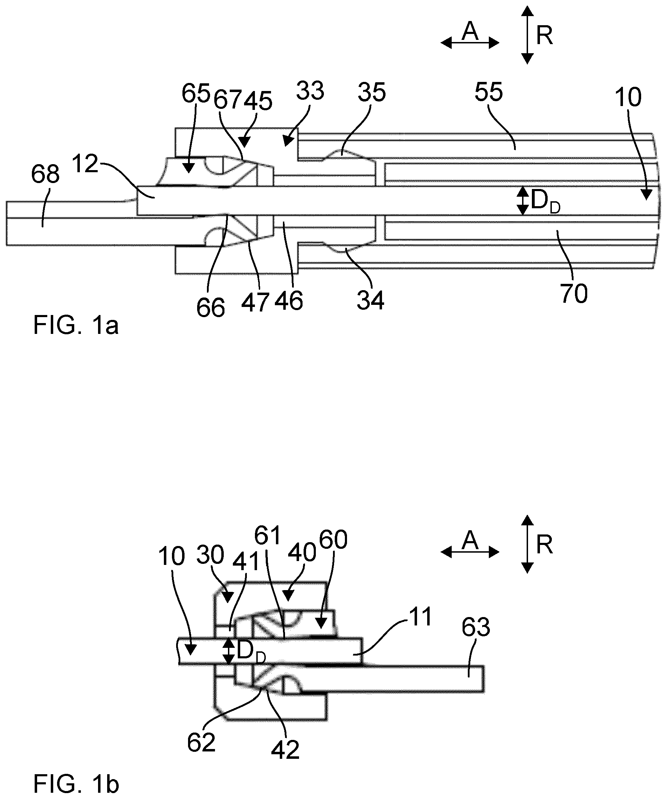

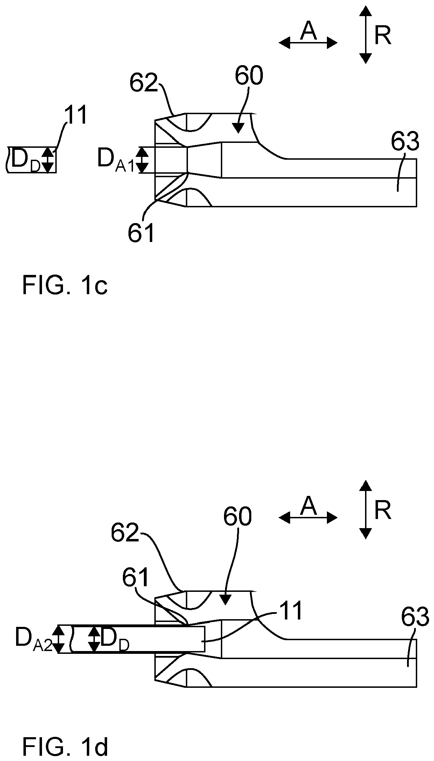

Wie Fig. 1 anschaulich zeigt, umfasst der Aktuator 100 für ein verstellbares Bauteil einen Draht 10 aus einer Formgedächtnislegierung. Der Draht 10 hat einen insbesondere in Fig. 1a bis 1d anschaulich dargestellten Durchmesser D_{D}, weist einen ersten Endabschnitt 11 und einen zweiten Endabschnitt 12 auf und erstreckt sich über eine veränderbare Länge L in einer axialen Richtung A. Die axiale Richtung A verläuft üblicherweise linear. Jedoch kann der Draht 10 auch derart verlegt sein, dass er sich nichtlinear erstreckt, sodass auch die axiale Richtung A nichtlinear verläuft.

Als Formgedächtnislegierungen kommen insbesondere Nickel-Titan-Legierungen in Betracht. Magnetische Formgedächtnislegierungen sind ferromagnetische Werkstoffe, beispielsweise Nickel-Mangan-Gallium-Legierungen. Bei Aktivierung des Formgedächtniseffekts bewirkt die hervorgerufene Phasenumwandlung eine Verformung des Drahts 10. Die Länge L des Drahts 10 verkürzt sich auf eine vorher eingeprägte Länge.

Der Formgedächtniseffekt kann thermisch aktiviert werden, indem der Draht 10 direkt mit Wärme beaufschlagt wird. Der Draht 10 kann ferner mit einem elektrischen Strom beaufschlagt werden, sodass sich der Draht 10 aufgrund seines Eigenwiderstands erwärmt.

Wie insbesondere Fig. 1b anschaulich zeigt, ist der Draht 10 im Bereich des ersten Endabschnitts 11 in eine Aufnahmeöffnung 61 eines elastisch verformbaren Anschlusselements 60 eingeklemmt. Die Aufnahmeöffnung 61 ist vorzugsweise rund, bevorzugt kreisförmig, ausgestaltet und hat einen veränderlichen Durchmesser D_{A1}, D_{A2}, wie insbesondere Fig. 1c und 1d zeigen. Wie aus Fig. 1, 1a hervorgeht, kann der Draht 10 ferner an dem zweiten Endabschnitt 12 in eine Aufnahmeöffnung 66 eines elastisch verformbaren Anschlusselements 65 eingeklemmt sein.

Der Aktuator 100 umfasst wenigstens ein Widerlager 40, 45, das eine Durchgangsöffnung 41, 46 für den Draht 10 und eine Lagerfläche 42, 47 aufweist. Die Lagerfläche 42, 47 ist geeignet, eine Kraft in radialer Richtung R zu übertragen. Das wenigstens eine Widerlager 40, 45 ist mit einem Loslager 30, durch das der Draht 10 in der axialen Richtung A beweglich gelagert ist, oder mit einem Festlager 33, durch das der Draht 10 in der axialen Richtung A fest angeordnet ist, verbunden. Das Widerlager 40, 45 kann, wie beispielsweise Fig. 1 zeigt, mit dem Loslager 30 und/oder mit dem Festlager 33 einteilig ausgebildet sein.

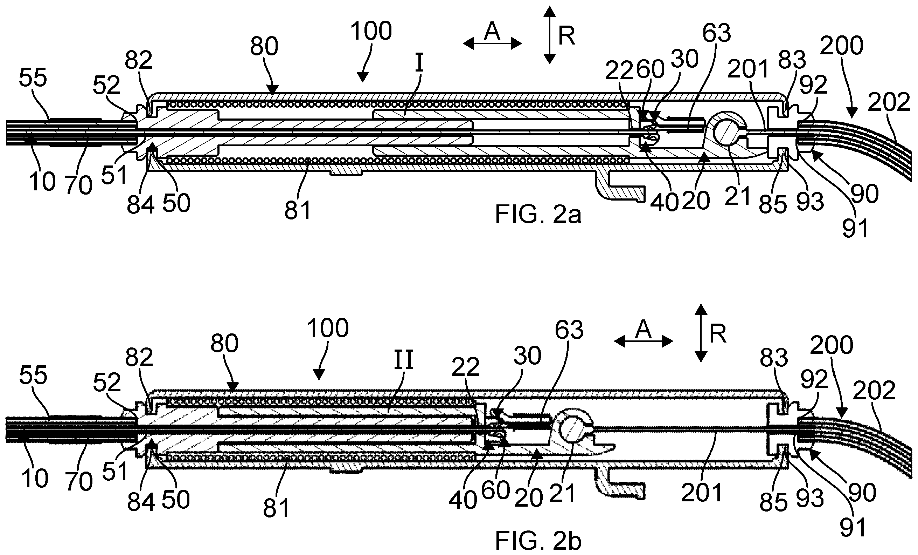

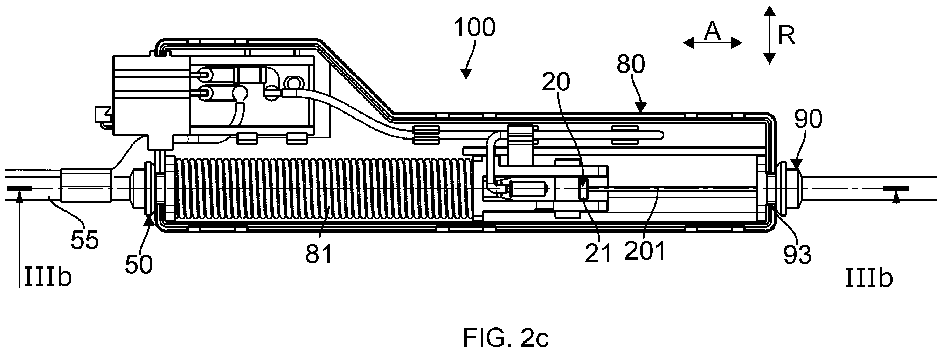

Der Draht 10 erstreckt sich bei den gezeigten Ausführungsbeispielen durch eine Durchgangsöffnung 51 einer fest angeordneten Axialführung 50. Die Axialführung 50 weist eine Abstützfläche 52 für eine Druckhülle 55 auf. Die Druckhülle 55 umgibt den Draht 10, ist ausgebildet, in der axialen Richtung A eine Druckkraft zu übertragen und zwischen dem Festlager 33 und der Abstützfläche 52 der Axialführung 50 eingespannt. Die Druckhülle 55 kann zumindest teilweise als Druckfeder ausgebildet sein. Wie insbesondere Fig. 2a und 2b anschaulich zeigen, kann die Axialführung 50 an einem Gehäuse 80 festgelegt sein. Zu diesem Zweck kann das Gehäuse 80 Befestigungsvorsprünge 82, 84 aufweisen, an denen die Axialführung 50 befestigt werden kann.

Die Anschlusselemente 60, 65 weisen jeweils eine Kontaktfläche 62, 67 auf, die an der Lagerfläche 42, 47 des Widerlagers 40, 45 anliegt. Die Lagerfläche 42, 47 und die Kontaktfläche 62, 67 können insbesondere konusförmig ausgebildet sein.

Bei der Verkürzung des Drahts 10 bewirkt dieser eine Zugkraft auf das Anschlusselement 60, 65. Das Anschlusselement 60, 65 gleitet mit der Kontaktfläche 62, 67 entlang der Lagerfläche 42, 47 des Widerlagers 40, 45. Dabei werden das Anschlusselement 60, 65 und das Widerlager 40, 45 gegeneinander verspannt. Das Widerlager 40, 45 bewirkt eine Gegenkraft mit einer radialen Komponente auf das Anschlusselement 60, 65. Das Anschlusselement 60, 65 wird durch die Gegenkraft in der radialen Richtung zusammengedrückt. Dadurch wird der Draht 10, wenn dieser eine Zugkraft auf das Anschlusselement 60, 65 ausübt, sicher in dem Anschlusselement 60, 65 gehalten.

Des Weiteren können die Anschlusselemente 60, 65 Anschlussabschnitte 63, 68 zur elektrischen Kontaktierung aufweisen. Dadurch kann der Draht 10 über die Anschlusselemente 60, 65 mit einem elektrischen Strom beaufschlagt werden. Die Anschlusselement 60, 65 können insbesondere in diesem Fall aus einer Kupferlegierung bestehen, beispielsweise aus Messing oder Bronze.

Das Loslager 30 und/oder das Festlager 33 können eine Aufnahme 34 für die Druckhülle 55 aufweisen. Die Aufnahme 34 kann, wie insbesondere Fig. 1, 1a anschaulich zeigen, einen Vorsprung 35 aufweisen. Der Vorsprung 35 ist geeignet, die Druckhülle 55 in der axialen Richtung A an dem Loslager 30 oder dem Festlager 33 zu halten.

Wie Fig. 2a bis 2c zeigen, weist der Aktuator 100 ein Stellglied 20 auf (in Fig. 1 nicht dargestellt). Das Stellglied 20 ist in der axialen Richtung A zwischen einer ersten Position I und einer zweiten Position II beweglich.

Das Stellglied 20 ist so angebunden, dass es durch eine Verkürzung der Länge L des Drahts 10 von der in Fig. 2a gezeigten ersten Position I in die in Fig. 2b gezeigte zweite Position II bewegt wird. Bei Aktivierung des Formgedächtniseffekts und Verkürzung des Drahts 10 bewirkt dieser eine Zugkraft auf die Anschlusselemente 60, 65. Die Zugkraft wird über die Kontaktfläche 62 des Anschlusselements 60 und die Lagerfläche 42 auf das Widerlager 40 und weiter auf das Loslager 30 übertragen. So werden Anschlusselement 60, Widerlager 40 und Loslager 30 zu dem Festlager 33 hin bewegt. Das Stellglied 20 wird dabei von der ersten Position I in die zweite Position II bewegt.

Der Draht 10 kann von einer Rückstellfeder 81 umgeben sein. Die Rückstellfeder 81 wirkt einer Bewegung des Stellglieds 20 von der ersten Position I in die zweite Position II entgegen und bewegt das Stellglied 20 von der zweiten Position II in die erste Position I. Beispielsweise kann die Rückstellfeder 81 zu diesem Zweck eine Rückstellkraft auf das Stellglied 20 und/oder das Loslager 30 ausüben. Wenn der Formgedächtniseffekt des Werkstoffs des Drahts 10 nicht aktiviert ist, wird die Druckkraft, die die Rückstellfeder 81 auf das Stellglied 20 und/oder das Loslager 30 ausübt, über das Widerlager 40 und über das Anschlusselement 60 auf den Draht 10 übertragen. Auf den Draht 10 wirkt dadurch eine Zugkraft, die eine Dehnung und so eine pseudoplastische Verformung des Drahts 10 bewirkt; die Länge L des Drahts 10 wird vergrößert. Das Stellglied 20 wird dabei von der zweiten Position II zurück in die erste Position I bewegt.

Das Stellglied 20 kann eine Aufnahme 21 für den Bowdenzug 200 aufweisen. Dann wird der Bowdenzug 200 bei einer Bewegung des Stellglieds 20 von der ersten Position I in die zweite Position II und zurück mit dem Stellglied 20 bewegt und kann das verstellbare Bauteil verstellen. Insbesondere weist der Bowdenzug 200 einen Innenzug 201 und eine Bowdenzughülle 202 auf. Dabei kann die Aufnahme 21 insbesondere derart ausgestaltet sein, dass sie den Innenzug 201 formschlüssig aufnehmen kann.

Das Stellglied 20 kann mit einer Durchgangsöffnung 22 für den Draht 10 versehen sein. Der Draht 10 kann sich insbesondere mit einem in radialer Richtung R vorhandenen Spiel durch die Durchgangsöffnung 22 erstrecken.

Insbesondere bei Formgedächtnislegierungen, bei denen der Formgedächtniseffekt thermisch aktiviert wird, kann der Draht 10 wenigstens teilweise von einem wärmeisolierenden Innenrohr 70 umgeben sein. Durch das Innenrohr 70 wird die Isolierung des Drahts 10 verbessert, sodass eine schnellere und gleichmäßigere Wärmeverteilung in dem Draht 10 erzielt wird.

Das Stellglied 20, das Loslager 30 und/oder die Axialführung 50 können in dem Gehäuse 80 aufgenommen sein. Ferner kann die Rückstellfeder 81 in dem Gehäuse 80 angeordnet sein. Der Draht 10 kann beispielsweise von außen in das Gehäuse 80 geführt sein, wie dies insbesondere aus Fig. 2a, 2b anschaulich hervorgeht. Der Bowdenzug 200, insbesondere der Innenzug 201 des Bowdenzugs 200, kann von der Aufnahme 21 des Stellglieds 20 aus dem Gehäuse 80 nach außen geführt sein und sich dabei insbesondere durch eine Durchgangsöffnung 91 eines Führungsteils 90 erstrecken. Ferner kann das Führungsteil 90 insbesondere eine Anschlagsfläche 92 für die Bowdenzughülle 202 aufweisen.

Das Gehäuse 80 kann zur Befestigung des Führungsteils 90 weitere Befestigungsvorsprünge 83, 85 aufweisen, die in eine Nut 93 des Führungsteils 90 eingreifen können.

Um den Draht 10 mit dem Anschlusselement 60, 65 zu verbinden, wird das Anschlusselement 60, 65 zunächst in der axialen Richtung A zusammengedrückt, um die Aufnahmeöffnung 61, 66 von einem ersten Durchmesser D_{A1} auf einen zweiten Durchmesser D_{A2}, der größer ist als der Durchmesser D_{D} des Drahts 10, zu vergrößern, siehe insbesondere Fig. 1c, 1d. Der Draht 10 wird in die Aufnahmeöffnung 61, 66 eingeführt, wenn der zweite Durchmesser D_{A2} der Aufnahmeöffnung 61, 66 erreicht ist. Sodann wird das Anschlusselement 60, 65 in der axialen Richtung A entspannt, um die Aufnahmeöffnung 61, 66 von dem zweiten Durchmesser D_{A2} auf den ersten Durchmesser D_{A1} zurückzuführen.

Alternativ dazu kann das Anschlusselement 60, 65 auch durch Aufschrumpfen mit dem Draht 10 verbunden werden. Dazu wird das Anschlusselement 60, 65 erwärmt, um die Aufnahmeöffnung 61, 66 von dem ersten Durchmesser D_{A1} auf den zweiten Durchmesser D_{A2} zu vergrößern. Der Draht 10 wird in die Aufnahmeöffnung 61, 66 eingeführt, wenn der zweite Durchmesser D_{A2} der Aufnahmeöffnung 61, 66 erreicht ist. Sodann wird das Anschlusselement 60, 65 abgekühlt, um die Aufnahmeöffnung 61, 66 von dem zweiten Durchmesser D_{A2} auf den ersten Durchmesser D_{A1} zurückzuführen. Bei dem so beschriebenen Verfahren entsteht eine Querpressverbindung des Anschlusselements 60, 65 mit dem Draht 10.

Durch den Verzicht auf eine plastische Verformung des Anschlusselements 60, 65 und des Drahts 10, wie es beispielsweise beim Crimpen geschieht, wird eine Beschädigung des Drahts 10 und des Anschlusselements 60, 65 verhindert. Dadurch ist die Wärmeverteilung in dem Draht besser als bei gecrimpten Verbindungen. Ferner wird eine über den Umfang gleichmäßig verteilte Krafteinleitung in den Draht 10 erzielt. Die elektrische Kontaktfläche des Drahts 10 erstreckt sich konzentrisch über den Drahtumfang. Der elektrische Übergangswiderstand wird dadurch gering gehalten.

Die Aktuatoren 100 gemäß den hier gezeigten Ausführungsbeispielen haben gemein, dass durch eine Verkürzung der Länge L des Drahts 10 die Kontaktfläche 62, 67 gegen die Lagerfläche 42, 47 verspannbar ist. Dadurch wird eine verbesserte mechanische Anbindung des Drahts 10 an die Anschlusselemente 60, 65 erzielt.

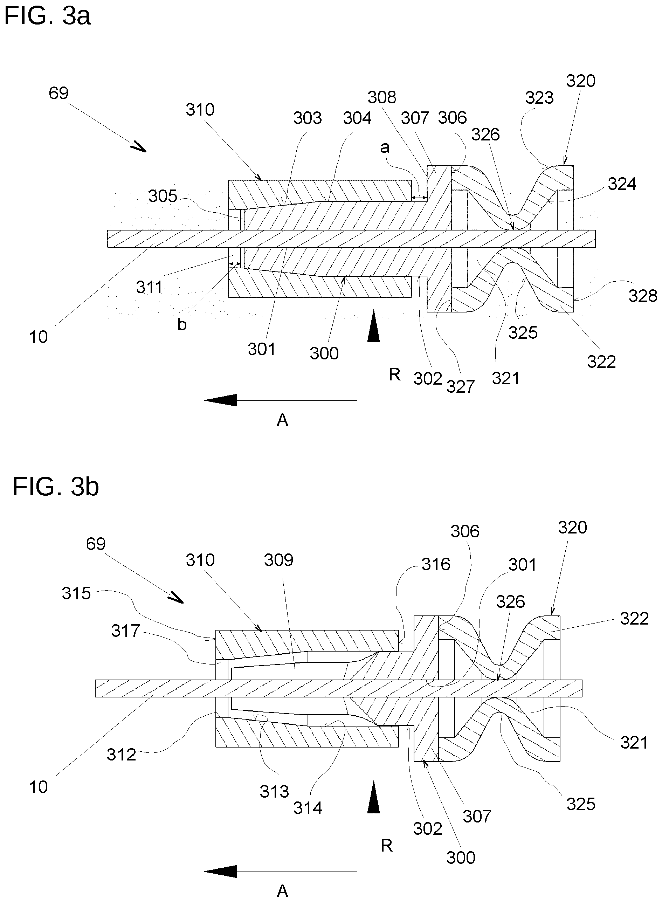

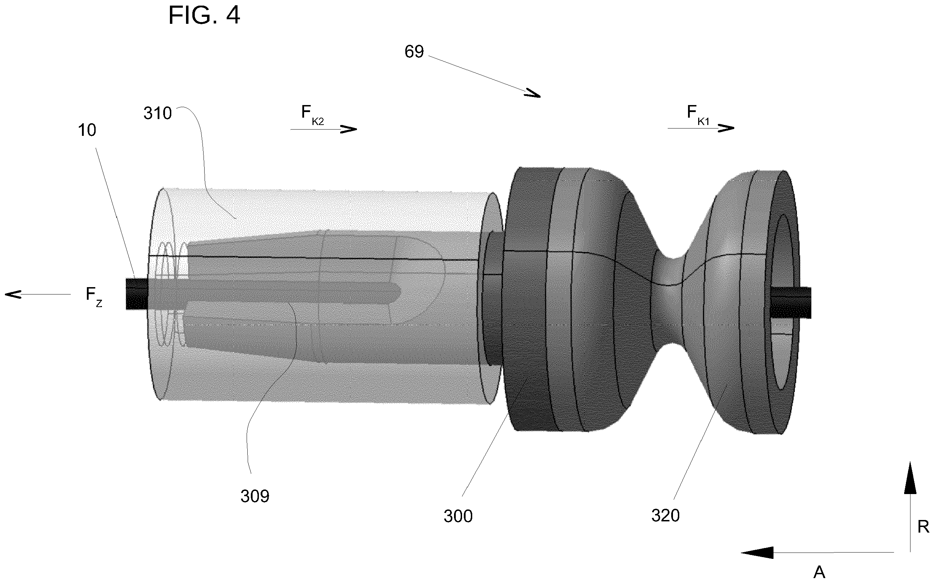

Eine besonders praxisgerechte Ausgestaltung des Anschlusselements 69, das für den zuvor beschriebenen Aktuator 100 Anwendung finden kann, ist in den Figuren 3a, 3b und 4 dargestellt. Das Anschlusselement 69 umfasst einen Klemmkeil 300, der eine sich in der axialen Richtung A erstreckende Aufnahmeöffnung 301 für den Draht 10 und eine mit Klemmabschnitten 303, 304 versehene Mantelfläche 302 aufweist. Das Anschlusselement 69 umfasst ferner eine auf den Klemmkeil 300 aufsteckbare Hülse 310, die eine sich in der axialen Richtung A erstreckende Durchgangsöffnung 311 und eine mit Klemmabschnitten 313, 314 versehene Innenfläche 312 aufweist. Weiterhin umfasst das Anschlusselement 69 eine mit dem Klemmkeil 300 gekoppelte oder verbundene Pressbuchse 320, die einen den Draht 10 aufnehmenden Hohlraum 321 und eine in radialer Richtung R plastisch verformbare und mit einer Innenfläche 324 versehene Wandung 322 aufweist. Durch eine plastische Verformung der Wandung 322, etwa in Form einer Stauchung oder Delle 325, wird eine erste Klemmkraft F_{K1} auf den Draht (10) an wenigstens einem durch die Innenfläche 324 gebildeten Halteabschnitt 326 erzeugt, die den Draht 10 und die Pressbuchse 320 kraftschlüssig miteinander verbindet. Zudem werden durch eine in dem Draht 10 in der axialen Richtung A hervorgerufene Zugkraft Fz der Klemmkeil 300 und die Hülse 310 derart gegeneinander verspannt, dass eine zweite Klemmkraft F_{K2} auf den Draht 10 in der Aufnahmeöffnung 301 des Klemmkeils 300 hervorgerufen wird, die zusätzlich den Draht 10 und den Klemmkeil 300 kraftschlüssig miteinander verbindet.

Der Klemmkeil 300 weist eine in der axialen Richtung A vordere Stirnfläche 305 auf und ist mit einer schlitzförmigen Ausnehmung 309 versehen. Die Ausnehmung 309 erstreckt sich, wie insbesondere die Figuren 2b und 3 zu erkennen geben, in der axialen Richtung A und mündet an der vorderen Stirnfläche 305. Die durch die schlitzförmige Ausnehmung 309 hervorgerufene Verformungsfähigkeit des Klemmkeils 300 stellt einen Toleranzausgleich sicher und trägt damit den in der Praxis unweigerlich auftretenden Fertigungstoleranzen in dem Durchmesser D_{D} des Drahtes 10 aber auch in den Durchmessern von Klemmkeil 300 und Hülse 310 Rechnung.

Die Mantelfläche 302 des Klemmkeils 300 und die Innenfläche 312 der Hülse 310 weisen jeweils einen sich in der axialen Richtung A konisch verjüngenden Klemmabschnitt 303, 313 und einen geradlinigen Klemmabschnitt 304, 314 auf. Die Klemmabschnitte 303, 304 des Klemmkeils 300 wirken mit den entsprechenden Klemmabschnitten 313, 314 der Hülse 310 zusammen, um den Klemmkeil 300 und die Hülse 310 zuverlässig gegeneinander zu verspannen.

Die Pressbuchse 320 und der Klemmkeil 300 sind als separate Bauteile ausgestaltet. Die Pressbuchse 320 weist in der axialen Richtung A eine vordere Kontaktfläche 327 und eine hintere Stirnfläche 328 auf. Der Klemmkeil 300 weist eine Gegenfläche 306 auf, die an der Kontaktfläche 327 anliegt. Die Kontaktfläche 327 der Pressbuchse 320 wird durch die Zugkraft Fz im Draht 10 auf die Gegenfläche 306 des Klemmkeils 300 gedrückt.

Der Klemmkeil 300 weist einen in der axialen Richtung A hinteren Absatz 307 auf, durch den die Gegenfläche 306 und eine der Gegenfläche 306 abgewandte Absatzfläche 308 gebildet werden. Die Hülse 310 weist eine in der axialen Richtung A vordere Stirnfläche 315 und eine in der axialen Richtung hintere Stirnfläche 316 auf. Bei auf dem Klemmkeil 300 aufgesteckter Hülse 310 sind der Absatz 307 des Klemmkeils 300 und die hintere Stirnfläche 316 der Hülse 310 durch einen vorgegebenen Abstand a voneinander getrennt. Weiterhin steht bei auf dem Klemmkeil 300 aufgesteckter Hülse 310 die vordere Stirnfläche 315 der Hülse 310 in der axialen Richtung A über die vordere Stirnfläche 305 des Klemmkeils 300 über, so dass die Innenfläche 312 der Hülse 310 an einem Absatz 317 einen Überstand b bildet. Der Überstand b und der Absatz 317 ermöglichen eine gezielte Festlegung der Klemmabschnitte 313, 314 an der Innenfläche 312 der Hülse 310 und der Klemmabschnitte 303, 304 an der Mantelfläche 302 des Klemmkeils 300.

## Patentansprüche

1. Anschlusselement für einen aus einer Formgedächtnislegierung bestehenden Draht (10) eines Aktuators (100) für ein verstellbares Bauteil, insbesondere eines Kraftfahrzeugs, umfassend:
einen Klemmkeil (300), der eine sich in einer axialen Richtung (A) erstreckende Aufnahmeöffnung (301) für den Draht (10) und eine mit wenigstens einem Klemmabschnitt (303, 304) versehene Mantelfläche (302) aufweist, und
eine auf den Klemmkeil (300) aufsteckbare Hülse (310), die eine sich in der axialen Richtung (A) erstreckende Durchgangsöffnung (311) und eine mit wenigstens einem Klemmabschnitt (313, 314) versehene Innenfläche (312) aufweist;
**gekennzeichnet durch** eine mit dem Klemmkeil (300) gekoppelte Pressbuchse (320), die einen den Draht (10) aufnehmenden Hohlraum (321) und eine in radialer Richtung (R) plastisch verformbare und mit einer Innenfläche (324) versehene Wandung (322) aufweist;
wobei durch eine plastische Verformung der Wandung (322) eine erste Klemmkraft (F_{K1}) auf den Draht (10) an wenigstens einem durch die Innenfläche (324) gebildeten Halteabschnitt (326) erzeugbar ist, die den Draht (10) und die Pressbuchse (320) kraftschlüssig miteinander verbindet, und
wobei durch eine in dem Draht (10) in der axialen Richtung (A) hervorgerufene Zugkraft (F_{Z}) der Klemmkeil (300) und die Hülse (310) derart gegeneinander verspannbar sind, dass eine zweite Klemmkraft (F_{K2}) auf den Draht (10) in der Aufnahmeöffnung (301) des Klemmkeils (300) erzeugbar ist, die zusätzlich den Draht (10) und den Klemmkeil (300) kraftschlüssig miteinander verbindet.

2. Anschlusselement nach Anspruch 1, **dadurch gekennzeichnet, dass** der Klemmkeil (300) eine in der axialen Richtung (A) vordere Stirnfläche (305) aufweist und mit wenigstens einer schlitzförmigen Ausnehmung (309) versehen ist,
wobei vorzugsweise die Ausnehmung (309) sich in der axialen Richtung (A) erstreckt und weiter vorzugsweise an der vorderen Stirnfläche (305) mündet.

3. Anschlusselement nach Anspruch 1 oder 2, **dadurch gekennzeichnet, dass** die Mantelfläche (302) des Klemmkeils (300) wenigstens einen sich in der axialen Richtung (A) konisch verjüngenden Klemmabschnitt (303) und/oder wenigstens einen geradlinigen Klemmabschnitt (304) aufweist;
wobei vorzugsweise die Innenfläche (312) der Hülse (310) wenigstens einen sich in der axialen Richtung (A) konisch verjüngenden Klemmabschnitt (313) und/oder wenigstens einen geradlinigen Klemmabschnitt (314) aufweist.

4. Anschlusselement nach einem der Ansprüche 1 bis 3, **dadurch gekennzeichnet, dass** die Pressbuchse (320) und der Klemmkeil (300) einteilig ausgestaltet sind.

5. Anschlusselement nach einem der Ansprüche 1 bis 4, **dadurch gekennzeichnet, dass** die Pressbuchse (320) und der Klemmkeil (300) als separate Bauteile ausgestaltet sind;
wobei vorzugsweise die Pressbuchse (320) eine Kontaktfläche (327) und der Klemmkeil (300) eine Gegenfläche (306), die an der Kontaktfläche (327) anliegt, aufweisen.

6. Anschlusselement nach einem der Ansprüche 1 bis 5, **dadurch gekennzeichnet, dass** der Klemmkeil (300) einen in der axialen Richtung (A) hinteren Absatz (307) aufweist und dass die Hülse (310) eine in der axialen Richtung (A) vordere Stirnfläche (315) und eine in der axialen Richtung (A) hintere Stirnfläche (316) aufweist;
wobei vorzugsweise die Gegenfläche (306) des Klemmkeils (300) durch den Absatz (307) gebildet wird.

7. Anschlusselement nach Anspruch 6, **dadurch gekennzeichnet, dass** bei auf dem Klemmkeil (300) aufgesteckter Hülse (310) der Absatz (307) des Klemmkeils (300) und die hintere Stirnfläche (316) der Hülse (310) durch einen Abstand (a) voneinander getrennt sind.

8. Anschlusselement nach Anspruch 6 oder 7, **dadurch gekennzeichnet, dass** bei auf dem Klemmkeil (300) aufgesteckter Hülse (310) die vordere Stirnfläche (315) der Hülse (310) in der axialen Richtung (A) über die vordere Stirnfläche (305) des Klemmkeils (300) übersteht, so dass die Innenfläche (312) der Hülse (310) einen Überstand (b) bildet.

9. Verfahren zum Verbinden eines Drahts (10), der einen Durchmesser (D_{D}) aufweist und sich in einer axialen Richtung (A) erstreckt, mit einem Anschlusselement (69) nach einem der Ansprüche 1 bis 8, das eine Aufnahmeöffnung (301, 321) für den Draht (10) aufweist, in welcher der Draht (10) einklemmbar ist, umfassend die folgenden Schritte:
a) durch eine plastische Verformung der Wandung (322) der Pressbuchse (320) wird eine erste Klemmkraft (F_{K1}) auf den Draht (10) an wenigstens einem durch die Innenfläche (324) gebildeten Halteabschnitt (326) erzeugt, die den Draht (10) und die Pressbuchse (320) kraftschlüssig miteinander verbindet, und
b) durch eine in dem Draht (10) in der axialen Richtung (A) hervorgerufene Zugkraft (F_{Z}) werden der Klemmkeil (300) und die Hülse (310) derart gegeneinander verspannt, dass eine zweite Klemmkraft (F_{K2}) auf den Draht (10) in der Aufnahmeöffnung (301) des Klemmkeils (300) erzeugt wird, die zusätzlich den Draht (10) und den Klemmkeil (300) kraftschlüssig miteinander verbindet.

10. Aktuator (100) für ein verstellbares Bauteil, insbesondere eines Kraftfahrzeugs, umfassend:
einen Draht (10) aus einer Formgedächtnislegierung, der einen ersten Endabschnitt (11) und einen zweiten Endabschnitt (12) aufweist und sich über eine veränderbare Länge (L) in einer axialen Richtung (A) erstreckt;
ein Stellglied (20), das in der axialen Richtung (A) zwischen einer ersten Position (I) und einer zweiten Position (II) beweglich ist;
ein Loslager (30), durch das der Draht (10) in der axialen Richtung (A) beweglich gelagert ist;
ein Festlager (33), durch das der Draht (10) in der axialen Richtung (A) fest angeordnet ist;
wenigstens ein Widerlager (40, 45), das mit dem Loslager (30) oder dem Festlager (33) verbunden und mit einer Durchgangsöffnung (41, 46) für den Draht (10) und einer Lagerfläche (42, 47), die geeignet ist, eine Kraft in radialer Richtung (R) zu übertragen, versehen ist;
**gekennzeichnet durch** wenigstens ein elastisch verformbares Anschlusselement (69) nach einem der Ansprüche 1 bis 8 für den Draht (10).

11. Aktuator (100) nach Anspruch 10, **dadurch gekennzeichnet, dass** der Draht (10) an dem ersten Endabschnitt (11) und an dem zweiten Endabschnitt (12) jeweils mit dem Anschlusselement (69) verbunden ist;
wobei vorzugsweise das Anschlusselement (60, 65) einen Anschlussabschnitt (63, 68) zur elektrischen Kontaktierung aufweist.

12. Aktuator (100) nach Anspruch 10 oder 11, **gekennzeichnet durch** eine fest angeordnete Axialführung (50), die mit einer Durchgangsöffnung (51) für den Draht (10) und mit einer Abstützfläche (52) versehen ist;
wobei vorzugsweise der Aktuator (100) eine den Draht (10) umgebende Druckhülle (55) aufweist, die zwischen dem Festlager (33) und der Abstützfläche (52) der Axialführung (50) eingespannt und geeignet ist, in der axialen Richtung (A) eine Druckkraft zu übertragen.

13. Aktuator (100) nach einem der Ansprüche 10 bis 12, **dadurch gekennzeichnet,**
**dass** eine Rückstellfeder (81) vorgesehen ist, die derart ausgestaltet ist, dass das Stellglied (20) entgegen der Wirkung der Rückstellfeder (81) von der ersten Position (I) in die zweite Position (II) bewegbar ist;
wobei vorzugsweise die Rückstellfeder (81) als Druckfeder ausgestaltet ist und
wobei ferner vorzugsweise die Rückstellfeder (81) in einem Gehäuse (80) zur Aufnahme des Stellglieds (20) oder des Loslagers (30) oder der Axialführung (50) angeordnet und zwischen der Axialführung (50) und dem Stellglied (20) eingespannt ist.

14. Aktuator (100) nach einem der Ansprüche 10 bis 13, **dadurch gekennzeichnet, dass** das Stellglied (20) mit einer Durchgangsöffnung (22) für den Draht (10) versehen ist, wobei vorzugsweise der Draht (10) sich mit einem in radialer Richtung (R) vorhandenen Spiel durch die Durchgangsöffnung (22) erstreckt.

15. Aktuator (100) nach einem der Ansprüche 10 bis 14, **dadurch gekennzeichnet, dass** das Stellglied (20) mit einer Aufnahme (21) für einen Bowdenzug (200) versehen ist, der einen Innenzug (201) und eine Bowdenzughülle (202) aufweist, wobei vorzugsweise die Aufnahme (21) ausgestaltet ist, formschlüssig mit dem Innenzug (201) verbunden zu werden;
wobei vorzugsweise ein Führungsteil (90) für den Bowdenzug (200) vorgesehen ist, das am Gehäuse (80) befestigt ist und eine Durchgangsöffnung (91) für den Innenzug (201) und eine Anschlagfläche (92) für die Bowdenzughülle (202) aufweist;
wobei ferner vorzugsweise das Führungsteil (90) mit einer Nut (93) versehen ist, in die formschlüssig wenigstens ein Befestigungsvorsprung (82, 84) eingreift.

16. Verstellbares Bauteil, insbesondere für ein Kraftfahrzeug, **gekennzeichnet durch** den Aktuator (100) nach einem der Ansprüche 10 bis 15.

## Claims

1. A connecting element for a shape memory alloy wire (10) of an actuator (100) for an adjustable component, in particular of a motor vehicle, comprising:
a clamping wedge (300) having a receiving opening (301) for the wire (10) extending in an axial direction (A) and a peripheral surface (302) provided with at least one clamping portion (303, 304), and
a sleeve (310) which can be fitted onto the clamping wedge (300) and which has a through-opening (311) extending in the axial direction (A) and an inner surface (312) provided with at least one clamping portion (313, 314);
**characterised by** a press bush (320) coupled to the clamping wedge (300) and having a cavity (321) receiving the wire (10) and a wall (322) plastically deformable in the radial direction (R) and provided with an inner surface (324);
wherein a first clamping force (F_{K1}) can be generated on the wire (10) at a least one holding section (326) formed by the inner surface (324) by plastic deformation of the wall (322), which clamping force connects the wire (10) and the press bushing (320) to one another in a force-locking manner, and
wherein the clamping wedge (300) and the sleeve (310) can be braced against one another by a tensile force (F_{Z}) produced in the wire (10) in the axial direction (A) in such a way that a second clamping force (F_{K2}) can be produced on the wire (10) in the receiving opening (301) of the clamping wedge (300), which additionally connects the wire (10) and the clamping wedge (300) to one another in a force-locking manner.

2. The connecting element according to claim 1, **characterised in that** the clamping wedge (300) has a front end face (305) in the axial direction (A) and is provided with at least one slot-shaped recess (309),
wherein preferably the recess (309) extends in the axial direction (A) and further preferably opens at the front end face (305).

3. The connecting element according to claim 1 or 2, **characterised in that** the lateral surface (302) of the clamping wedge (300) has at least one clamping portion (303) tapering conically in the axial direction (A) and/or at least one rectilinear clamping portion (304);
wherein preferably the inner surface (312) of the sleeve (310) has at least one clamping section (313) tapering conically in the axial direction (A) and/or at least one rectilinear clamping section (314).

4. The connecting element according to any one of claims 1 to 3, **characterised in that** the press bush (320) and the clamping wedge (300) are formed in one piece.

5. The connecting element according to any one of claims 1 to 4, **characterised in that** the press bush (320) and the clamping wedge (300) are designed as separate components;
wherein preferably the press bush (320) has a contact surface (327) and the clamping wedge (300) has a mating surface (306) bearing against the contact surface (327).

6. The connecting element according to any one of claims 1 to 5, **characterised in that** the clamping wedge (300) has a rear shoulder (307) in the axial direction (A) and **in that** the sleeve (310) has a front end face (315) in the axial direction (A) and a rear end face (316) in the axial direction (A);
wherein preferably the mating surface (306) of the clamping wedge (300) is formed by the shoulder (307).

7. The connecting element according to claim 6, **characterised in that** when the sleeve (310) is fitted on the clamping wedge (300), the shoulder (307) of the clamping wedge (300) and the rear end face (316) of the sleeve (310) are separated from each other by a distance (a).

8. The connecting element according to claim 6 or 7, **characterised in that**, when the sleeve (310) is fitted on the clamping wedge (300), the front end face (315) of the sleeve (310) projects in the axial direction (A) beyond the front end face (305) of the clamping wedge (300), so that the inner face (312) of the sleeve (310) forms a projection (b).

9. A method of connecting a wire (10), which has a diameter (D_{D}) and extends in an axial direction (A), to a connecting element (69) according to any one of claims 1 to 8, which has a receiving opening (301, 321) for the wire (10), in which the wire (10) can be clamped, comprising the following steps:
a) a first clamping force (F_{K1}) is generated on the wire (10) at a least one holding section (326) formed by the inner surface (324) by plastic deformation of the wall (322) of the press bushing (320), which force connects the wire (10) and the press bushing (320) to one another in a force-fitting manner, and
b) the clamping wedge (300) and the sleeve (310) are braced against each other by a tensile force (F_{Z}) generated in the wire (10) in the axial direction (A) in such a way that a second clamping force (F_{K2}) is generated on the wire (10) in the receiving opening (301) of the clamping wedge (300), which additionally connects the wire (10) and the clamping wedge (300) non-positively to each other.

10. An actuator (100) for an adjustable component, in particular of a motor vehicle, comprising:
a shape memory alloy wire (10) having a first end portion (11) and a second end portion (12) and extending over a variable length (L) in an axial direction (A);
a control element (20) movable in the axial direction (A) between a first position (I) and a second position (II);
a floating bearing (30) by which the wire (10) is movably supported in the axial direction (A);
a fixed bearing (33) by which the wire (10) is fixed in the axial direction (A);
at least one abutment (40, 45) connected to the floating bearing (30) or to the fixed bearing (33) and provided with a through hole (41, 46) for the wire (10) and a bearing surface (42, 47) capable of transmitting a force in the radial direction (R);
**characterised by** at least one elastically deformable connecting element (69) according to any one of claims 1 to 8 for the wire (10).

11. The actuator (100) according to claim 10, **characterised in that** the wire (10) is connected at the first end portion (11) and at the second end portion (12) respectively to the connecting element (69);
wherein preferably the connecting element (60, 65) has a connection section (63, 68) for electrical contacting.

12. The actuator (100) according to claim 10 or 11, **characterised by** a fixed axial guide (50) provided with a through opening (51) for the wire (10) and with a support surface (52);
wherein preferably the actuator (100) comprises a thrust sleeve (55) surrounding the wire (10), clamped between the fixed bearing (33) and the support surface (52) of the axial guide (50) and adapted to transmit a thrust force in the axial direction (A).

13. The actuator (100) according to any one of claims 10 to 12, **characterised in that**
a return spring (81) is provided, which is configured in such a way that the control element (20) can be moved from the first position (I) into the second position (II) counter to the action of the return spring (81);
wherein preferably the return spring (81) is configured as a compression spring, and
wherein further preferably the return spring (81) is arranged in a housing (80) for receiving the control element (20) or the floating bearing (30) or the axial guide (50), and is clamped between the axial guide (50) and the actuator (20).

14. The actuator (100) according to any one of claims 10 to 13, **characterised in that** the control element (20) is provided with a through opening (22) for the wire (10), wherein preferably the wire (10) extends through the through opening (22) with a clearance present in the radial direction (R).

15. The actuator (100) according to any one of claims 10 to 14, **characterised in that** the control element (20) is provided with a receptacle (21) for a Bowden cable (200) having an inner cable (201) and a Bowden cable sheath (202),
wherein preferably the receptacle (21) is configured to be connected to the inner cable (201) in a form-fitting manner;
wherein a guide part (90) for the Bowden cable (200) is preferably provided, which is fastened to the housing (80) and has a through opening (91) for the inner cable (201) and a stop surface (92) for the Bowden cable sheath (202);
wherein furthermore the guide part (90) is preferably provided with a groove (93) in which at least one fastening projection (82, 84) engages in a form-fitting manner.

16. An adjustable component, in particular for a motor vehicle, **characterised by** the actuator (100) according to any one of claims 10 to 15.

## Revendications

1. Elément de raccordement pour un fil (10) en alliage à mémoire de forme d'un actionneur (100) pour un composant réglable, notamment d'un véhicule automobile, comprenant :
une cale de serrage (300) qui présente une ouverture de réception (301) pour le fil (10) s'étendant dans une direction axiale (A) et une surface d'enveloppe (302) pourvue d'au moins une section de serrage (303, 304), et
un manchon (310) pouvant être enfichée sur la cale de serrage (300), qui présente une ouverture de passage (311) s'étendant dans la direction axiale (A) et une surface intérieure (312) pourvue d'au moins une section de serrage (313, 314) ;
**caractérisé par** une douille de compression (320) couplée à la cale de serrage (300), qui présente un espace creux (321) recevant le fil (10) et une paroi (322) déformable plastiquement dans la direction radiale (R) et pourvue d'une surface intérieure (324) ;
une déformation plastique de la paroi (322) permettant de générer une première force de serrage (F_{K1}) sur le fil (10) au niveau d'au moins une section de retenue (326) formée par la surface intérieure (324), laquelle force relie le fil (10) et la douille de sertissage (320) par adhérence, et
la cale de serrage (300) et le manchon (310) pouvant être serrées l'une contre l'autre par une force de traction (F_{Z}) provoquée dans le fil (10) dans la direction axiale (A) de telle sorte qu'une deuxième force de serrage (F_{K2}) peut être générée sur le fil (10) dans l'ouverture de réception (301) de la cale de serrage (300), qui relie en outre le fil (10) et la cale de serrage (300) par adhérence.

2. Elément de raccordement selon la revendication 1, **caractérisé en ce que** la cale de serrage (300) présente une face frontale (305) avant dans la direction axiale (A) et est pourvue d'au moins un évidement (309) en forme de fente,
de préférence, l'évidement (309) s'étend dans la direction axiale (A) et débouche de préférence encore sur la face frontale avant (305).

3. Elément de raccordement selon la revendication 1 ou 2, **caractérisé en ce que** la surface d'enveloppe (302) de la cale de serrage (300) présente au moins une section de serrage (303) se rétrécissant de manière conique dans la direction axiale (A) et/ou au moins une section de serrage rectiligne (304) ;
de préférence, la surface intérieure (312) du manchon (310) présente au moins une section de serrage (313) se rétrécissant de manière conique dans la direction axiale (A) et/ou au moins une section de serrage rectiligne (314).

4. Elément de raccordement selon l'une des revendications 1 à 3, **caractérisé en ce que** la douille de serrage (320) et la cale de serrage (300) sont conçues en une seule pièce.

5. Elément de raccordement selon l'une des revendications 1 à 4, **caractérisé en ce que** la douille de sertissage (320) et la cale de serrage (300) sont conçues comme des composants séparés ;
de préférence, la douille de sertissage (320) présente une surface de contact (327) et la cale de serrage (300) une contre-surface (306) qui s'appuie sur la surface de contact (327).

6. Elément de raccordement selon l'une des revendications 1 à 5, **caractérisé en ce que** la cale de serrage (300) présente un épaulement (307) situé à l'arrière dans la direction axiale (A) et **en ce que** le manchon (310) présente une face avant (315) dans la direction axiale (A) et une face arrière (316) dans la direction axiale (A);
de préférence, la contre-surface (306) de la cale de serrage (300) étant formée par l'épaulement (307).

7. Elément de raccordement selon la revendication 6, **caractérisé en ce que**, lorsque le manchon (310) est emboîté sur la cale de serrage (300), l'épaulement (307) de la cale de serrage (300) et la face frontale arrière (316) du manchon (310) sont séparés par une distance (a).

8. Elément de raccordement selon la revendication 6 ou 7, **caractérisé en ce que**, lorsque le manchon (310) est emboîté sur la cale de serrage (300), la surface frontale avant (315) du manchon (310) dépasse de la surface frontale avant (305) de la cale de serrage (300) dans la direction axiale (A), de sorte que la surface intérieure (312) du manchon (310) forme une saillie (b).

9. Procédé de connexion d'un fil (10) présentant un diamètre (D_{D}) et s'étendant selon une direction axiale (A) à un élément de raccordement (69) selon l'une des revendications 1 à 8, présentant une ouverture de réception (301, 321) du fil (10) dans laquelle le fil (10) peut être serré, comprenant les étapes suivantes :
a) une déformation plastique de la paroi (322) de la douille de sertissage (320) génère une première force de serrage (F_{K1}) sur le fil (10) au niveau d'au moins une section de retenue (326) formée par la surface intérieure (324), qui relie le fil (10) et la douille de sertissage (320) par adhérence, et
b) par une force de traction (F_{Z}) provoquée dans le fil (10) dans la direction axiale (A), la cale de serrage (300) et le manchon (310) sont serrées l'une contre l'autre de telle sorte qu'une deuxième force de serrage (F_{K2}) est générée sur le fil (10) dans l'ouverture de réception (301) de la cale de serrage (300), laquelle relie en outre le fil (10) et la cale de serrage (300) par adhérence.

10. Actuateur (100) pour un composant réglable, notamment d'un véhicule automobile, comprenant :
un fil (10) en alliage à mémoire de forme, qui présente une première partie d'extrémité (11) et une deuxième partie d'extrémité (12) et qui s'étend sur une longueur variable (L) dans une direction axiale (A) ;
un actionneur (20) qui est mobile dans la direction axiale (A) entre une première position (I) et une deuxième position (II) ;
un palier libre (30) par lequel le fil (10) est monté mobile dans la direction axiale (A) ;
un palier fixe (33) par lequel le fil (10) est disposé de manière fixe dans la direction axiale (A) ;
au moins une butée (40, 45) reliée au palier libre (30) ou au palier fixe (33) et munie d'une ouverture de passage (41, 46) pour le fil (10) et d'une surface d'appui (42, 47) apte à transmettre une force dans la direction radiale (R) ;
**caractérisé par** au moins un élément de raccordement (69) élastiquement déformable selon l'une des revendications 1 à 8 pour le fil (10).

11. Actuateur (100) selon la revendication 10, **caractérisé en ce que** le fil (10) est relié à l'élément de raccordement (69) au niveau de la première partie d'extrémité (11) et au niveau de la deuxième partie d'extrémité (12) respectivement ;
l'élément de connexion (60, 65) présentant de préférence une section de connexion (63, 68) pour la mise en contact électrique.

12. Actuateur (100) selon la revendication 10 ou 11, **caractérisé par** un guide axial fixe (50) qui est pourvu d'une ouverture de passage (51) pour le fil (10) et d'une surface d'appui (52) ;
l'actuateur (100) comprenant de préférence une gaine de pression (55) entourant le fil (10), qui est serrée entre le palier fixe (33) et la surface d'appui (52) du guide axial (50) et qui est apte à transmettre une force de pression dans la direction axiale (A).

13. Actuateur (100) selon l'une des revendications 10 à 12, **caractérisé en ce que** ,
il est prévu un ressort de rappel (81) qui est configuré de telle sorte que l'actionneur (20) peut être déplacé de la première position (I) à la deuxième position (II) à l'encontre de l'action du ressort de rappel (81) ;
le ressort de rappel (81) étant de préférence conçu comme un ressort de compression et
le ressort de rappel (81) étant de préférence disposé dans un boîtier (80) destiné à recevoir l'actionneur (20) ou le palier libre (30) ou le guidage axial (50) et étant serré entre le guidage axial (50) et l'actionneur (20).

14. Actuateur (100) selon l'une quelconque des revendications 10 à 13, **caractérisé en ce que** l'actionneur (20) est pourvu d'une ouverture de passage (22) pour le fil (10), de préférence le fil (10) s'étendant à travers l'ouverture de passage (22) avec un jeu présent dans la direction radiale (R).

15. Actuateur (100) selon l'une des revendications 10 à 14, **caractérisé en ce que** l'actionneur (20) est pourvu d'un logement (21) pour un câble Bowden (200), qui présente un câble intérieur (201) et une gaine de câble Bowden (202),
le logement (21) étant de préférence conçu pour être relié par complémentarité de forme au câble intérieur (201) ;
une pièce de guidage (90) étant de préférence prévue pour le câble Bowden (200), laquelle est fixée au boîtier (80) et présente une ouverture de passage (91) pour le câble intérieur (201) et une surface de butée (92) pour la gaine de câble Bowden (202) ;
la pièce de guidage (90) étant de préférence pourvue d'une rainure (93) dans laquelle s'engage par complémentarité de forme au moins une saillie de fixation (82, 84).

16. Composant réglable, notamment pour un véhicule automobile, **caractérisé par** l'actuateur (100) selon l'une des revendications 10 à 15.
